Europäisches Patentamt

European Patent Office

Office européen des brevets

(19)

(11) Veröffentlichungsnummer: **0 327 507**

**A2**

(12) **EUROPÄISCHE PATENTANMELDUNG**

(21) Anmeldenummer: 89810083.9

(22) Anmeldetag: 01.02.89

(51) Int. Cl.⁴: **B 01 D 46/26**

(30) Priorität: 02.02.88 CH 355/88

(43) Veröffentlichungstag der Anmeldung:
09.08.89 Patentblatt 89/32

(84) Benannte Vertragsstaaten:
AT CH DE FR IT LI

(71) Anmelder: **Jura Elektroapparate-Fabriken L. Henzirohs AG**
**Bahnhofstrasse 135**
**CH-4626 Niederbuchsiten (CH)**

(72) Erfinder: **von Rohr, Josef**
**Weidstrasse 296**
**CH-4703 Kestenholz (CH)**

**Schnetz, Rolf**
**Grubenacherweg 4**
**CH-3303 Jegenstorf (CH)**

(74) Vertreter: **Tschudi, Lorenz**
**Bovard AG Patentanwälte VSP Optingenstrasse 16**
**CH-3000 Bern 25 (CH)**

(54) **Luftreinigungsgerät.**

(57) Das Gerät weist einen Rotor (20) auf, der von einer von einem Motor (5) antreibbaren Welle (6) mitgenommen wird. Der Rotor besteht im wesentlichen aus einem biegeweichen, plissierten, vorzugsweise zick-zack-gefalteten Materialstreifen mit rauher Oberfläche. Es sind Mittel (7-10, 21-24) vorhanden, um den plissierten Materialstreifen unter der Wirkung der Zentrifugalkraft formstabil zu halten. Um den Rotor (20) raumsparend lagern und transportieren zu können ist vorgesehen, dass wenigstens ein Teil (7-10, 24) dieser Mittel drehfest mit der Welle (6) verbunden sind.

Fig. 5

EP 0 327 507 A2

**Beschreibung**

## Luftreinigungsgerät

Die vorliegende Erfindung bezieht sich auf ein Gerät gemäss dem Oberbegriff des Anspruchs 1.

Derartige Vorrichtungen sind beschrieben in folgenden Druckschriften: EP-B 46 137, GB-A 1 571 514, US-A 4 411 675 und US-A 4 292 055. Bei diesen bekannten Geräten sind zur Formhaltung des rotierenden, plissierten Materialstreifens die erforderlichen Mittel entweder am Rotor selbst angebracht oder sie fehlen. Die erste dieser bekannten Ausführungsformen hat den Nachteil, dass die Mittel den Rotoren eine feste Form geben und daher für den Transport und die Lagerung nicht gefaltet werden können. Die zweiterwähnte Ausführungsform hat den Vorteil, dass der Rotor für Transport und Lagerung gefaltet werden kann. Damit verbunden ist der Nachteil, dass er in Abhängigkeit der Drehzahl seine Form ändert, wodurch seine Leistung unbestimmt ist.

Die vorliegende Erfindung stellt sich die Aufgabe ein Gerät zu schaffen, dessen Rotor die Vorteile der Rotoren bekannter Art ohne deren Nachteile vereinigt.

Erfindungsgemäss wird diese Aufgabe gelöst durch das kennzeichnende Merkmal des Anspruchs 1.

Der plissierte Materialstreifen, auf dem sich der Staub niederschlägt, ist ein Verschleissteil, das je nach der Staubbelastung periodisch oder aperiodisch auszuwechseln ist. In jedem Falle hat der Benutzer eines solchen Gerätes diese Materialstreifen an Lager zu halten. Dadurch, dass wenigstens ein Teil der Formhaltemittel geräteseitig fest angebracht ist, kann der Materialstreifen für die Lagerung und den Transport äusserst raumsparend zusammengefaltet und für den Einsatz im Gerät entsprechend auseinandergefaltet und gewendet werden.

Sind die Mittel derart gestaltet, dass sie der Zentrifugalkraft entgegengerichtet, formschlüssig am Materialstreifen angreifen, so wird eine äusserst einfache Auswechselbarkeit des plissierten Materialstreifens erreicht indem dieser lediglich (ohne Werkzeug oder sonstige Manipulationen) in das Gerät eingelegt bzw. diesem entnommen werden kann. In besonders einfacher Weise lässt sich dies realisieren, wenn die Mittel einen Teller aufweisen, der mit einer konzentrischen, erhabenen und kreisförmigen Rippe versehen ist. Bei dieser Tellerform wird der plissierte Materialstreifen auf der dem Teller zugewandten Seite mit einer nutartigen Ausnehmung versehen und mit dieser Seite auf den Teller gelegt, so dass Rippe und Ausnehmung kämmen. Weitere Massnahmen für das Einlegen des Materialstreifens sind nicht erforderlich.

Ist der plissierte Materialstreifen mit Abstand vom Teller und parallel zu diesem mit einem unverlierbaren, biegeweichen Strang versehen, kann seine Drehgeschwindigkeit weiter gesteigert werden, ohne dass seine Form unter der Wirkung der Zentrifugalkraft oder seine Faltbarkeit für den Versand und die Lagerung beeinträchtigt würden.

Ist der Strang mit den anliegenden Falzen materialschlüssig oder auf andere Weise fest verbunden, ist bei drehendem Rotor eine gleichmässige Teilung der Falten gewährleistet.

Anhand der beiliegenden schematischen Zeichnung wird die Erfindung beispielsweise erläutert. Es zeigen:

Fig. 1 ein Gerät im vertikalen Längsschnitt längs der Linie I-I in Fig. 2,

Fig. 2 einen Schnitt längs der Linie II-II in Fig. 1, wobei der Rotor weggelassen ist,

Fig. 3 einen Schnitt längs der Linie III-III in Fig. 1,

Fig. 4 einen Schnitt längs der Linie IV-IV in Fig. 2,

Fig. 5 ein Detail zu den Fig. 1 bis 3 in perspektivischer Darstellung und

Fig. 6 ein Schaltschema zum Antrieb eines Gerätes gemäss den Fig. 1 bis 5.

Das Gerät weist ein Gehäuseunterteil 1 auf, das eine Standebene bildet und an dem um eine Achse 2 ein nach oben wegschwenkbarer Deckel 3 angelenkt ist. Senkrecht auf dem Boden des Gehäuseunterteils 2 und mit diesem fest verbunden steht die Achse 4 eines elektrischen Aussenläufermotors 5, dessen Gehäuse 6 ein das Drehmoment übertragendes Maschinenelement, das heisst eine Welle bildet. Auf dieses Gehäuse 6 ist drehfest ein Teller 7 mit einer horizontalen Auflagefläche 8 aufgesetzt, die, von einer zur Tellerdrehachse 9 konzentrischen Ringrippe 10 überragt wird. Das Gehäuseunterteil 1 ist mit einem zylindrisch gestalteten Teil mit einer luftdurchlässigen, grillartigen Wand 11 versehen, die den Teller 7 in einem Bereich von ca. 270° umgibt.

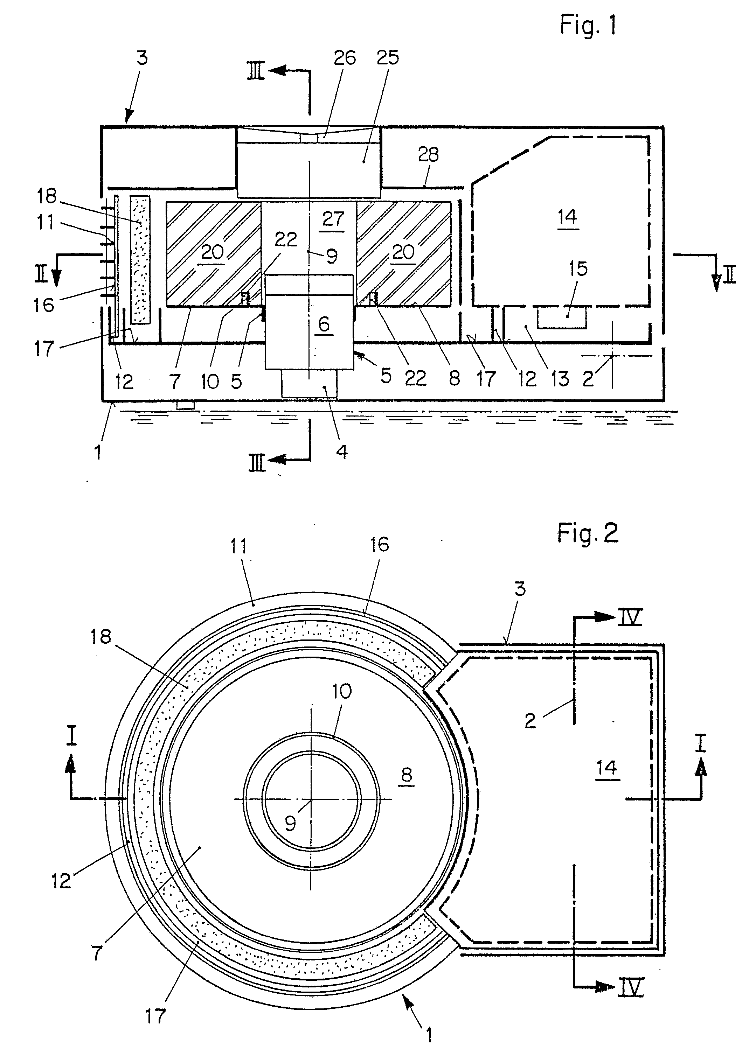

Zwischen der Innenseite der Gehäusewand 11 und dem Teller 7 verläuft eine kreisabschnittförmig gebogene Wasserrinne 12 (Fig. 2), die mit ihren Enden in eine Bucht 13 (Fig. 1) mündet und aus dieser mit Wasser gespeist wird. Die Wasserversorgung der Bucht 13 erfolgt mittels einem bei hochgeschwenktem Deckel 3 wegnehmbaren, geschlossenen Vorratstank 14, dessen nach unten in die Bucht 13 gerichteter Ausguss 15 als selbsttätiges Ventil (Vogeltränkeprinzip) gestaltet ist. In dem Masse, in dem das Wasser in der Wasserrinne 12 verdunstet, strömt dieses aus der Bucht 13 in die Wasserrinne 12 nach, da der Ausguss 15 in der Bucht 13 den Wasserpegel konstant hält, solange sich Wasser im Vorratstank 14 befindet. Entlang dem zylindrisch gestalteten Teil der Gehäusewand 11 ist ein saugfähiges Vlies 16 hochkant in die Wasserrinne 12 gestellt, in dem das Wasser aus der Wasserrinne hochsteigt und verdunstet. Zur Begünstigung der Verdunstung und zur Steigerung des Luftdurchsatzes kann das Vlies gelocht sein.

Zwischen dem Rand des Tellers 7 und der Wasserrinne 12 verläuft parallel eine Nut 17, in die hochkant eine poröse, gasdurchlässige Filtermatte 18 gestellt ist, deren aktive Oberfläche im wesentlichen durch Aktivkohle gebildet wird. Sowohl das Vlies 16 als auch die Filtermatte 18 sind bei hochgeklapptem Deckel 3 leicht auswechselbar.

Beide können von Hand nach oben herausgezogen werden. Ein neues Vlies 16 bzw. eine neue Filtermatte 18 werden von Hand kreisabschnittförmig gebogen und hochkant in die Wasserrinne 12 bzw. in die Nut 17 gestellt. Weitere Massnahmen sind nicht erforderlich.

Die Filtermatte 18 ist vorzugsweise zweischichtig aufgebaut. Die eine Schicht besteht aus einer luftdurchlässigen, schaumstoffartigen Aktivkohlematte, deren Dicke 5 bis 15 mm beträgt. Auf diese Kohlematte (und mit ihr verbunden) liegt ein luftdurchlässiges Vlies aus einem selbstschmierenden Kunststoff (auf dem Markt erhältlich unter der Bezeichnung "Electret" von der Firma 3M), welches elektrostatisch kleinste Staubpartikel ausscheidet. Die Verbindung zwischen der Kohlematte und dem einige Millimeter (2 bis 5) dicken "Electret"-Vlies besteht vorzugsweise aus einem allseits anliegenden, grobmaschigen Gazemantel. In Strömungsrichtung der Luft wird das "Electret"-Vlies vorzugsweise hinter der Aktivkohlematte liegend angeordnet.

Zwischen dem zylinderförmigen Teil der Gehäusewand 11 und dem Vlies 16 können netzwerkartig Widerstandsheizleiter angeordnet werden, wenn ein Aufheizen der durch das Vlies hindurch tretenden, befeuchteten Luft erwünscht ist. Diese Heizleiter können indessen auch in den die Gehäusewand bildenden Grill integriert sein.

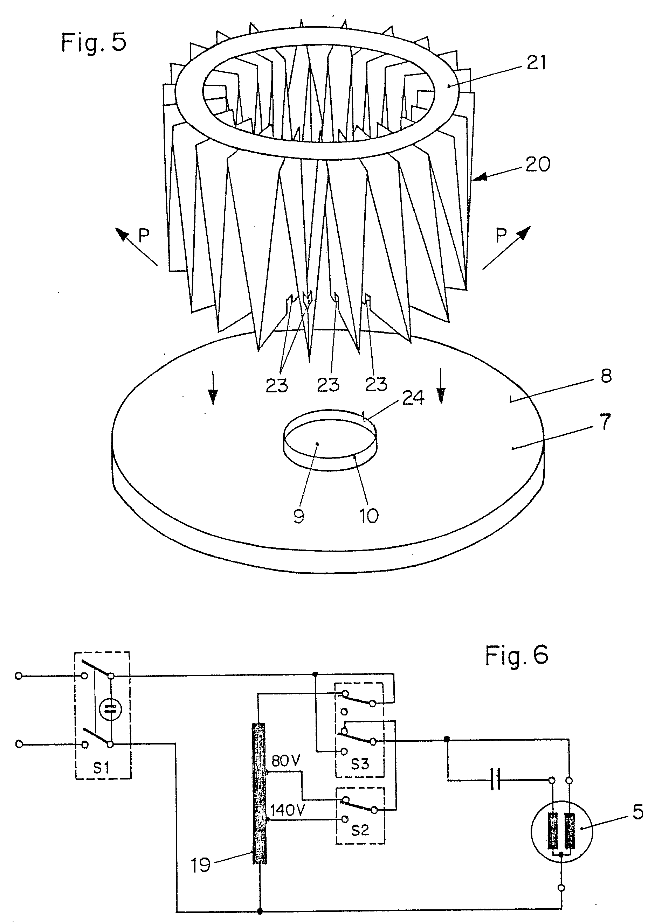

Der Motor 5 ist über einen Transformator 19 (Fig. 6) und einen Hauptschalter $S_1$ an einer Stromquelle anschliessbar. Der Transformator 19 ist sekundärseitig mit drei Ausgängen unter schiedlicher Spannung versehen und durch eine Schalteranordnung $S_2$, $S_3$ entsprechend der gewünschten Motordrehzahl wahlweise an einen der Ausgänge anschliessbar.

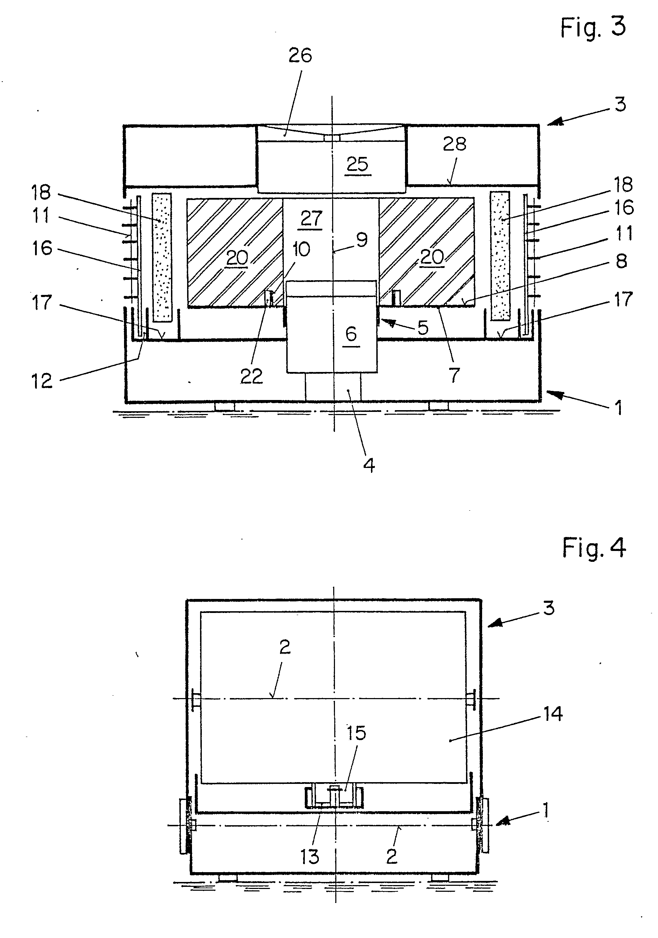

Auf den Teller 7 ist ein Rotor 20 gestellt. Dieser besteht im wesentlichen aus einem plissierten (zick-zack-gefalteten) Materialstreifen, dessen Enden miteinander verbunden sind. Dieser Materialstreifen ist vorzugsweise ein Kunststoff-oder Papiervlies und hat eine rauhe, faserige Oberfläche. Zur Gewährleistung einer achssymmetrischen Verteilung der Falze des Rotors um dessen Drehachse ist auf diesen auf der Oberseite ein biegeweiches, ringförmiges Band 21 geleimt, welches mit dem jedem der anliegenden Falze fest verbunden ist. Anstelle eines Bandes 21 kann auch ein schnurartiger Strang verwendet werden. Nebst einer gleichmässigen Teilung des Rotors stellt das Band 21 sicher, dass der obere Teil des Rotors 20 unter der Wirkung der Zentrifugalkraft nicht nach aussen flieht und bestimmt in Verbindung mit der Rippe 10 den Durchmesser des Freiraums 27. Auf der Unterseite ist der Rotor 20 im Bereich der Falze mit nutartigen Ausnehmungen 22 versehen, welche eine zur Ringrippe 10 parallele, kreisförmige Gegenfläche 23 bilden. Ist der Rotor 20 auf den Teller 7 abgestellt, greift die konzentrische Ringrippe in die Ausnehmungen 22 und bildet dabei mit ihrer inneren Seite eine gegen die Gegenfläche 23 gerichtete Anschlagfläche 24. Durch das Zusammenwirken der Ringrippe 10 mit den nutartigen Ausnehmungen 22 kann der Rotor 20 beim Einlegen in das Gerät in einfacher Weise auf dem Teller 7 zentriert werden. Beim drehendem Rotor 20 gelangt unter der Zentrifugalkraft die Gegenfläche 23 in Anlage mit der Anschlagfläche 24, die eine Verformung des Rotors 20 verhindert und diesen formstabil hält. Die Ringrippe 10 könnte auch am Rande des Tellers 7 angeordnet sein, so dass sie den Rotor 20 peripher umschliesst und ihn in dieser Weise zentriert und gegen eine Verformung unter der Wirkung der Zentrifugalkraft schützt. In den Fig. 1, 3 und 5 ist der Rotor 20 in seiner Betriebsstellung gezeigt. Für den Versand und die Lagerung wird der Rotor zusammengeklappt, das heisst, zu gegenüberliegenden Seiten unten an zwei Falzen gefasst und in Richtung der in Fig. 5 eingezeichneten Pfeile P seitlich hochgezogen. Dabei kippen die einzelnen Lamellen nach innen auf die Standebene, wobei sich das biegeweiche Band 21 in Zick-Zack-Faltung zwischen die einzelnen Falze des plissierten Bandes legen. Danach wird der Rotor zu einem quaderförmigen Körper geformt und in dieser Weise ohne irgendwelche Verlusträume verpackt.

Der Deckel 3 weist auf seiner Oberseite einen Lufteintrittstrichter 25 auf, der achsial zur Drehachse 9 des Rotors 20 ausgerichtet und durch ein grillartiges Gitter 26 abgedeckt ist. Bei drehendem Rotor 20 wird die Luft durch das Gitter 26 angesaugt und strömt in den achsialen, zylindrischen Rotorfreiraum 27 von wo aus sie, durch den Rotor 20 beschleunigt, radial nach aussen gegen die Filtermatte 18 bewegt wird. Im Bereich des plissierten Bandes wird die Luft derart verwirbelt, dass sich die darin enthaltenen Staubpartikel an der rauhen Wandoberfläche niederschlagen. Diese grob gereinigte Luft wird zur Feinreinigung durch die Filtermatte 18 und anschlies send zur Befeuchtung durch das Vlies 16 gepresst, von wo sie durch die gitterartige Gehäusewand 11 austritt. Das beschriebene Gerät kann auch ohne die Filtermatte 18 oder ohne das Vlies 16 betrieben werden, wenn auf eine Feinreinigung der Luft (z.B. von Riechstoffen) und/oder auf eine Luftbefeuchtung verzichtet werden kann.

Damit unter der Wirkung des sich vor der Filtermatte 18 (bzw. dem Vlies 16 und der Gehäusewand 11) bildenden Staudrucks die Luft nicht nach oben entweichen kann, ist am Deckel 3 eine ebene Platte 28 befestigt, welche rechtwinklig zur Rotordrehachse 9 und mit geringstem Abstand zum Rotor angeordnet ist. Eine kreisrunde Ausnehmung in der Platte 28 schliesst praktisch dicht an die innere Mündung des Lufteintrittstrichters 25 an. Die Randzone der Platte 28 ist zudem derart profiliert, dass sie gleichzeitig als Gegenlager für die Filtermatte 18 und das Vlies 16 dienen kann.

Im Strömungsweg der Luft können vor und/oder nach dem Rotor 20 Abscheidelektroden angebracht werden, um elektrostatisch aufgeladene Staubpartikel auszufällen. Es ist indessen auch möglich, den Rotor 20 selbst elektrisch leitend auszuführen und mit einem elektrischen Potential zu versehen, so dass daran zusätzlich eine elektrostatische Abscheidung geladener Staubpartikel erfolgt.

**Patentansprüche**

1. Gerät zum Reinigen von Gas, insbesondere Luft mit einem Rotor (20), der von einer antreibbaren Welle (6) mitgenommen wird, wobei der Rotor im wesentlichen aus einem biegeweichen, plissierten, vorzugsweise zick-zack-gefalteten Materialstreifen mit rauher Oberfläche besteht und Mittel (7-10, 21-24) vorhanden sind, um den plissierten Materialstreifen unter der Wirkung der Zentrifugalkraft formstabil zu halten, dadurch gekennzeichnet, dass wenigstens ein Teil (7-10, 24) dieser Mittel drehfest mit der Welle (6) verbunden sind.

2. Gerät nach Anspruch 1, dadurch gekennzeichnet, dass der mit der Welle verbundene Teil (7-10), 24) der Mittel, der Zentrifugalkraft entgegengerichtet, form- und/oder kraftschlüssig am Materialstreifen angreifen.

3. Gerät nach Anspruch 2, dadurch gekennzeichnet, dass der erwähnte Teil (7-10, 24) der Mittel einen mit der Welle (6) getrieblich verbundenen Teller (7) mit mindestens in grober Näherung horizontaler Auflagefläche (8) aufweisen, welche mit einer zur Tellerdrehachse (9) konzentrischen, kreisförmigen Anschlagfläche (24) versehen ist, und dass die dem Teller (7) zugewandte Seite des plissierten Materialstreifens mit einer gegen die Anschlagfläche anliegenden Gegenfläche (23) versehen ist.

4. Gerät nach Anspruch 3, dadurch gekennzeichnet, dass die Anschlagfläche (24) durch eine Rippe (10) und die Gegenfläche (23) durch entsprechende nutartige Ausnehmungen (22) im plissierten Materialstreifen gebildet sind.

5. Gerät nach Anspruch 2, dadurch gekennzeichnet, dass die Mittel mit der Welle getrieblich verbundene Stäbe aufweisen, welche den plissierten Materialstreifen käfigartig umgreifen.

6. Gerät nach Anspruch 4, dadurch gekennzeichnet, dass mit Abstand vom Teller (7) ein biegeweicher Strang (21) unverlierbar am plissierten Materialstreifen angeordnet ist.

7. Gerät nach Anspruch 6, dadurch gekennzeichnet, dass der biegeweiche Strang (21) ein auf der dem Teller (7) abgewandten Seite des plissierten Materialstreifens angeordneter Strang ist, der mit den anliegenden Falzen verbunden ist.

8. Gerät nach einem der Ansprüche 1 bis 7, dadurch gekennzeichnet, dass eine kreisbogenförmige Wasserrinne (12) die Drehachse (9) der Welle (6) konzentrisch umgibt, wobei der Kreisbogendurchmesser grösser als der Tellerdurchmesser ist.

9. Gerät nach Anspruch 8, dadurch gekennzeichnet, dass die Wasserrinne (12) über ein selbsttätiges Ventil (15) an einen auswechselbaren Wasservorratsbehälter (14) angeschlossen ist.

10. Gerät nach Anspruch 8 oder 9, gekennzeichnet durch eine oder mehrere hochkant in die Wasserrinne (12) stellbare, saugfähige Matte (16).

11. Gerät nach Anspruch 10, dadurch gekennzeichnet, dass die Matte (16) gelocht ist.

12. Gerät nach einem der Ansprüche 1 bis 7, dadurch gekennzeichnet, dass die Drehachse (9) der Welle von einer kreisbogenförmigen Nut (17) zur Hochkantaufnahme einer Filtermatte (18) umgeben ist, wobei der Kreisbogendurchmesser grösser als der Tellerdurchmesser ist.

13. Gerät nach Anspruch 8 und 12, dadurch gekennzeichnet, dass der Kreisbogendurchmesser der Nut (17) kleiner als der Kreisbogendurchmesser der Wasserrinne (12) ist.

14. Gerät nach Anspruch 12, dadurch gekennzeichnet, dass die aktive Oberfläche der Filtermatte (18) durch Aktivkohle gebildet ist.

15. Gerät nach Anspruch 1, dadurch gekennzeichnet, dass in Strömungsrichtung des Gases vor oder nach dem Rotor (20) ein elektrostatischer Abscheider vorhanden ist, um die in der Luft enthaltenen Staubpartikel elektrostatisch abzuscheiden.

16. Gerät nach Anspruch 1 oder 15, dadurch gekennzeichnet, dass der Rotor (20) als elektrostatische Abscheideelektrode ausgebildet ist.

17. Gerät nach Anspruch 14 und 15, dadurch gekennzeichnet, dass die Filtermatte (18) zweischichtig aufgebaut ist, dass eine luftdurchlässige, schaumstoffartige Aktivkohlematte die erste Schicht und ein luftdurchlässiges Vlies aus einem selbstschmierenden Kunststoff die zweite Schicht bildet, welche Schichten vorzugsweise durch einen netzförmigen Mantel miteinander verbunden sind.

18. Gerät nach Anspruch 1, dadurch gekennzeichnet, dass im Luftstrom vor und/oder nach dem Rotor (20) eine Widerstandsheizung vorhanden ist.

19. Gerät nach Anspruch 1, dadurch gekennzeichnet, dass der Motor (5) über einen Transformator (19) mit mehreren Ausgängen ans Netz anschliessbar ist, und dass der Motor (5) entsprechend der gewünschten Drehzahl mittels einer Schalteinrichtung ($S_1$, $S_2$) wahlweise an einen der Ausgänge anschliessbar ist.

Fig. 1

Fig. 2

Fig. 3

Fig. 4

Fig. 5

Fig. 6